# EUROPÄISCHE PATENTANMELDUNG

(11) **EP 2 080 931 A2**
(43) Veröffentlichungstag der Anmeldung: **22.07.2009**
(21) Anmeldenummer: 09000296.5
(22) Anmeldetag: 12.01.2009
(51) Int. Cl.: F16F 15/02

(54) **Aktiv gedämpfte Lageranordnung**

(30) Priorität: 15.01.2008 DE 102008004565
(71) Anmelder: AB SKF, 415 50 Göteborg (SE)
(72) Erfinder: Petermeier, Bernhard, 1080 Wien (AT); Springer, Helmut, 2344 Maria-Enzersdorf (AT)
(74) Vertreter: Kohl, Thomas

(57) **Zusammenfassung**

Die Erfindung betrifft eine aktiv gedämpfte Lageranordnung mit einem Innenteil (4), einem Außenteil (5), welches eine Bohrung (6) aufweist, innerhalb derer das Innenteil (4) relativ zum Außenteil (5) drehbar angeordnet ist und wenigstens einem Aktor (8) zum Erzeugen einer im Bereich einer Angriffsfläche (11) auf das Außenteil (5) einwirkenden zeitlich variablen Stellkraft. Die erfindungsgemäße Lageranordnung zeichnet sich dadurch aus, dass die Stellkraft eine bezüglich der Bohrung (6) des Außenteils (5) tangential gerichtete Komponente aufweist, die wenigstens so groß wie eine bezüglich der Bohrung (6) des Außenteils (5) radial gerichtete Komponente ist.

## Beschreibung

Die Erfindung betrifft eine aktiv gedämpfte Lageranordnung. Weiterhin betrifft die Erfindung ein Verfahren zur aktiven Dämpfung eines drehenden Maschinenteils.

Bei einem in einer Lageranordnung drehbar gelagerten Maschinenteil können unerwünschte Schwingungen auftreten, die sich störend auswirken und/oder die Lebensdauer der Lageranordnung verkürzen können. In diesem Zusammenhang ist es bereits bekannt, die Schwingungen durch passive Maßnahmen zu dämpfen. Die passiven Maßnahmen sind in der Regel so ausgelegt, dass sie die Schwingungsenergie in andere Energieformen, insbesondere in Wärmeenergie, umwandeln und dadurch die Schwingungsamplitude reduzieren.

Weiterhin ist es bereits bekannt, bei einer Lageranordnung unerwünschte Schwingungen mittels aktiver Maßnahmen zu dämpfen. Dabei kann so vorgegangen werden, dass zur Schwinggeschwindigkeit entgegen gerichtete Kräfte durch einen oder mehrere Aktoren erzeugt werden. Beispielsweise sind aus der DE 10 2005 058 786 A1 ein Verfahren und eine Vorrichtung zur Schwingungsreduktion eines Zylinders insbesondere einer Druckmaschine bekannt. Dort ist eine Anordnung offenbart, bei der mehrere Aktoren in Radialrichtung auf ein Zylinderrollenlager einwirken. Dabei werden die Aktoren abhängig von der Winkellage des Zylinders angesteuert.

Aus der DE 198 26 174 C2 ist ein Verfahren zur Änderung der Einspannverhältnisse eines Drehteils bekannt. Bei diesem Verfahren werden bei Änderung der Zusammensetzung der vom Drehteil kommenden Schwingungen die axialen und radialen Einspannverhältnisse zwischen dem Drehteil und dem Wellenlager in Abhängigkeit von Schwingungen, die am Drehteil auftreten, verändert. Die Veränderung der Einspannverhältnisse bewirkt beispielsweise, dass die Frequenzen der Eigenschwingungen des Drehteils und auch die Übertragungsfunktion vom Drehteil an ein weiteres Bauteil verändert werden.

Eine Aufgabe der Erfindung ist es, bei einem drehenden Maschinenteil auftretende Schwingungen in möglichst optimaler Weise zu dämpfen.

Diese Aufgabe wird durch eine aktiv gedämpfte Lageranordnung mit der Merkmalskombination des Anspruchs 1 und ein Verfahren gemäß Anspruch 22 gelöst.

Die erfindungsgemäße Lageranordnung weist ein Innenteil, ein Außenteil mit einer Bohrung, innerhalb derer das Innenteil relativ zum Außenteil drehbar angeordnet ist und wenigstens einen Aktor zum Erzeugen einer im Bereich einer Angriffsfläche auf das Außenteil einwirkenden zeitlich variablen Stellkraft auf. Die Lageranordnung zeichnet sich dadurch aus, dass die Stellkraft eine bezüglich der Bohrung des Außenteils tangential gerichtete Komponente aufweist, die wenigstens so groß wie eine bezüglich der Bohrung des Außenteils radial gerichtete Komponente ist. Dies bedeutet nicht, dass die Stellkraft jeweils tatsächlich eine radial gerichtete Komponente aufweist. Lediglich die tangential gerichtete Komponente der Stellkraft ist zwingend vorhanden und wenigstens so groß wie die optional vorhandene radial gerichtete Komponente.

Die Erfindung hat den Vorteil, dass sie eine wirksame Schwingungsdämpfung mit einer hohen Dynamik ermöglicht. Ein weiterer Vorteil besteht darin, dass die erfindungsgemäße Lageranordnung eine sehr hohe Steifigkeit aufweist. Außerdem ist eine sehr kompakte Bauweise möglich. Die Reduzierung oder Vermeidung einer radial wirkenden Stellkraft wirkt sich positiv auf die Lebensdauer der Lageranordnung aus.

Vorzugsweise ist die tangential gerichtete Komponente der Stellkraft wenigstens doppelt so groß wie die radial gerichtete Komponente. Besonders vorteilhaft ist es, wenn die Lageranordnung so ausgebildet ist, dass die Stellkraft keine radial gerichtete Komponente aufweist. In diesem Fall wirkt die Stellkraft ausschließlich in tangentialer Richtung.

Die Lageranordnung kann so ausgebildet sein, dass die Stellkraft entlang einer Wirkungslinie wirkt, die vollständig außerhalb der Bohrung des Außenteils verläuft. Weiterhin kann vorgesehen sein, dass die Positionierung und/oder Länge des Aktors entlang einer Achse variierbar ist, die vollständig außerhalb der Bohrung des Außenteils verläuft.

Die Lageranordnung kann wenigstens ein Stabilisierungselement aufweisen, das eine Bewegung des Außenteils in Axialrichtung der Bohrung unterbindet und eine Bewegung des Außenteils quer zur Axialrichtung der Bohrung zulässt. Auf diese Weise kann die Einwirkung ungünstiger Querkräfte und Momente auf die Aktoren verhindert oder zumindest abgemildert werden.

Das Stabilisierungselement kann beispielsweise als ein Stützsteg ausgebildet sein. Dabei kann der Stützsteg in Axialrichtung steifer ausgebildet sein als quer zur Axialrichtung.

Ebenso ist es möglich, das Stabilisierungselement als eine Linearführung auszubilden.

Der Aktor kann wenigstens partiell in einer ersten Ausnehmung im Außenteil angeordnet sein. Weiterhin kann der Aktor wenigstens partiell in einer zweiten Ausnehmung in einem Gehäuse angeordnet sein. Diese Maßnahmen ermöglichen jeweils eine platzsparende Unterbringung des Aktors, so dass die Lageranordnung in einer sehr kompakten Bauform realisiert werden kann.

Die Lageranordnung kann so ausgebildet sein, dass der Aktor in einem Ruhezustand eine von Null verschiedene Stellkraft erzeugt. Dies bedeutet, dass der Aktor mit einer inneren Vorspannung eingebaut sein kann.

Die Lageranordnung kann wenigstens ein elastisches Element aufweisen, das eine zur Stellkraft antiparallele Rückstellkraft erzeugt.

In einem bevorzugten Ausführungsbeispiel weist die Lageranordnung ein als Wälzlager ausgebildetes Lager auf. Dabei kann das Außenteil als ein Außenring des Lagers ausgebildet sein. Das Innenteil kann als ein Innenring des Lagers ausgebildet sein.

Die Lageranordnung weist vorzugsweise wenigstens zwei Aktoren auf, die zueinander parallele Stellkräfte erzeugen. Alternativ dazu oder zusätzlich kann die Lageranordnung wenigstens zwei Aktoren aufweisen, die zueinander orthogonale Stellkräfte erzeugen. Mit den orthogonalen Stellkräften können beliebige Bewegungen des Außenteils in einer Ebene bewirkt werden, so dass eine sehr flexible Anpassung an die jeweils auftretende Schwingungssituation möglich ist. Weiterhin ist es möglich, dass die Lageranordnung wenigstens zwei Aktoren aufweist, die keine zueinander orthogonale oder parallele Stellkräfte erzeugen

Sämtliche Aktoren können bezogen auf die Umfangsrichtung der Bohrung des Außenteils gleichsinnig und/oder äquidistant angeordnet sein. Außerdem können die Wirkungslinien sämtlicher Stellkräfte vollständig außerhalb der Bohrung des Außenteils verlaufen.

Die Erfindung bezieht sich weiterhin auf ein Verfahren zur aktiven Dämpfung eines drehenden Maschinenteils. Beim erfindungsgemäßen Verfahren wird das Maschinenteil oder ein mit dem Maschinenteil verbundenes Innenteil in einer Bohrung eines Außenteils drehbar gelagert. Mittels wenigstens eines Aktors wird eine im Bereich einer Angriffsfläche auf das Außenteil einwirkende zeitlich variable Stellkraft erzeugt. Das erfindungsgemäße Verfahren zeichnet sich dadurch aus, dass die Stellkraft mit einer bezüglich der Bohrung des Außenteils tangential gerichteten Komponente erzeugt wird, die mindestens so groß wie eine bezüglich der Bohrung des Außenteils radial gerichtete Komponente ist.

Die Erfindung wird nachstehend anhand der in der Zeichnung dargestellten Ausführungsbeispiele erläutert.

Es zeigen:
- Figur 1: ein erstes Ausführungsbeispiel einer erfindungsgemäß ausgebildeten Lageranordnung in Querschnittsdarstellung,
- Figur 2: das erste Ausführungsbeispiel der Lageranordnung in einer axialen Schnittdarstellung, wobei der Schnitt entlang der in Figur 1 eingezeichneten Linie A-A verläuft,
- Figur 3: das erste Ausführungsbeispiel der Lageranordnung in einer gegenüber Figur 2 modifizierten axialen Schnittdarstellung,
- Figur 4: ein zweites Ausführungsbeispiel der Lageranordnung in einer Figur 1 entsprechenden Schnittdarstellung,
- Figur 5: das zweite Ausführungsbeispiel der Lageranordnung in einer Figur 2 entsprechenden Schnittdarstellung,
- Figur 6: das zweite Ausführungsbeispiel der Lageranordnung in einer Figur 3 entsprechenden Schnittdarstellung,
- Figur 7: einen vergrößerten Ausschnitt aus Figur 6 im Bereich einer der Stützstege,
- Figur 8: einen der Stützstege in Schnittdarstellung, wobei der Schnitt entlang der in Figur 7 eingezeichneten Linie C-C verläuft,
- Figur 9: einen der Stützstege in einer weiteren Schnittdarstellung, wobei der Schnitt entlang der in Figur 7 eingezeichneten Linie D-D verläuft,
- Figur 10: ein drittes Ausführungsbeispiel der Lageranordnung in einer Figur 1 entsprechenden Schnittdarstellung,
- Figur 11: das dritte Ausführungsbeispiel der Lageranordnung in einer Figur 2 entsprechenden Schnittdarstellung,
- Figur 12: das dritte Ausführungsbeispiel der Lageranordnung in einer Figur 3 entsprechenden Schnittdarstellung,
- Figur 13: ein viertes Ausführungsbeispiel der Lageranordnung in einer schematischen Darstellung,
- Figur 14: ein fünftes Ausführungsbeispiel der Lageranordnung in einer schematischen Darstellung,
- Figur 15: ein sechstes Ausführungsbeispiel der Lageranordnung in einer schematischen Darstellung,
- Figur 16: ein siebtes Ausführungsbeispiel der Lageranordnung in einer schematischen Darstellung,
- Figur 17: ein achtes Ausführungsbeispiel der Lageranordnung in einer schematischen Darstellung,
- Figur 18: ein neuntes Ausführungsbeispiel der Lageranordnung in einer schematischen Darstellung und
- Figur 19: ein zehntes Ausführungsbeispiel der Lageranordnung in einer schematischen Darstellung.

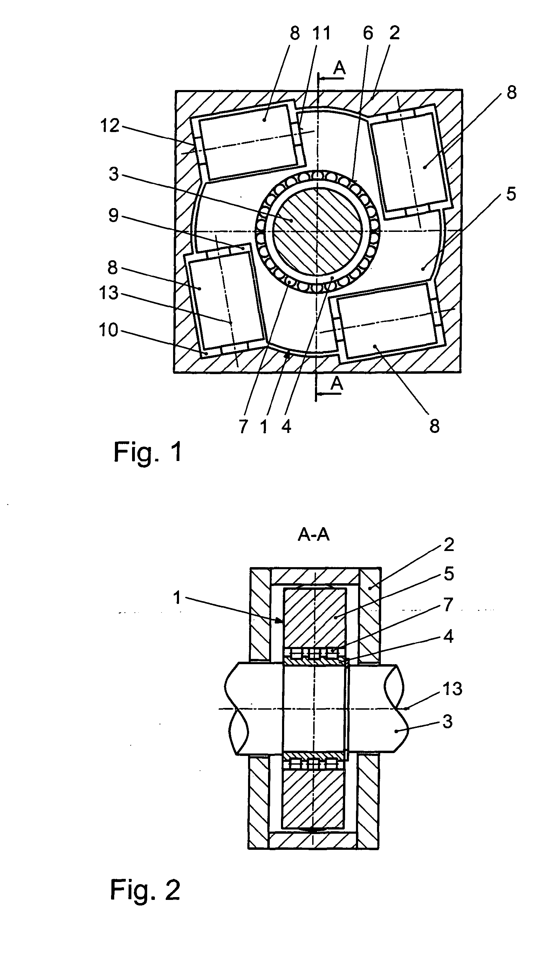

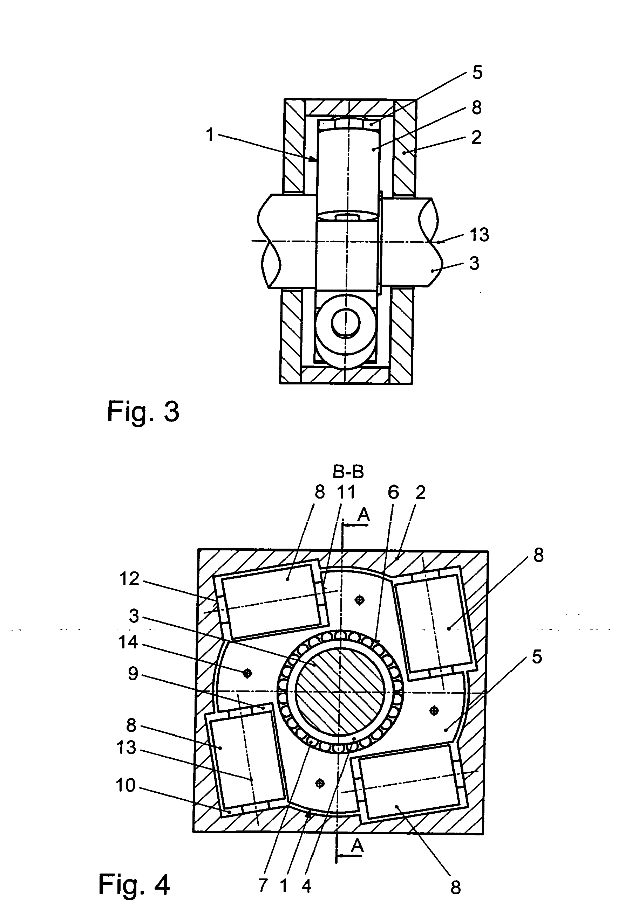

Figur 1 zeigt ein erstes Ausführungsbeispiel einer erfindungsgemäß ausgebildeten Lageranordnung in Querschnittsdarstellung. Der Schnitt ist senkrecht zur Axialrichtung der Lageranordnung geführt. Weitere Schnitte, die jeweils entlang der in Figur 1 eingezeichneten Schnittlinie A-A verlaufen, sind in den Figuren 2 und 3 dargestellt. Die Darstellungen der Figuren 2 und 3 unterscheiden sich dadurch, dass in Figur 3 weniger Komponenten der Lageranordnung in den Schnitt einbezogen sind als in Figur 2.

Die Lageranordnung weist ein Lager 1 auf, das in einem Gehäuse 2 angeordnet ist und eine Welle 3 relativ zum Gehäuse 2 drehbar lagert. Auf der Welle 3 kann beispielsweise ein nicht figürlich dargestellter Zylinder einer Druckmaschine oder ein sonstiges Maschinenteil angeordnet sein. Das Lager 1 weist ein Innenteil 4 und ein Außenteil 5 auf. Das Innenteil 4 ist in einer Bohrung 6 des Außenteils 5 angeordnet. Zwischen dem Innenteil 4 und dem Außenteil 5 rollen Wälzkörper 7 ab. Bei dem Innenteil 4 kann es sich beispielsweise um einen Innenring handeln. Das Außenteil 5 kann beispielsweise die Funktion eines Außenrings übernehmen oder einen zusätzlichen Außenring enthalten. Die Wälzkörper 7 können als Zylinderrollen ausgebildet sein.

Die Lageranordnung weist weiterhin vier Aktoren 8 auf, die in einander paarweise gegenüberliegenden Ausnehmungen 9 des Außenteils 5 und Ausnehmungen 10 des Gehäuses 2 angeordnet sind. Die Aktoren 8 greifen jeweils im Bereich einer Angriffsfläche 11 am Außenteil 5 an und stützen sich im Bereich einer Stützfläche 12 am Gehäuse 2 ab. Die Aktoren 8 zeichnen sich jeweils dadurch aus, dass ihre Positionierung und/oder Länge entlang ihrer Längsachse 13 variiert werden kann und auf diese Weise der Abstand zwischen der Angriffsfläche 11 und der Stützfläche 12 bzw. die Stellkraft, welche am Ort der Angriffsfläche 11 auf das Außenteil 5 einwirkt, beeinflusst werden kann. Als Stellkraft wird im Folgenden jeweils die am Ort der jeweiligen Angriffsfläche 11 vom jeweiligen Aktor 8 erzeugte Kraft bezeichnet. Die insgesamt auf das Außenteil 5 einwirkende Kraft ergibt sich durch Vektoraddition sämtlicher Stellkräfte.

Die Längsachsen 13 der Aktoren 8 verlaufen senkrecht zu den Angriffsflächen 11. Die Angriffsflächen 11 sind jeweils parallel zu einer Radialrichtung der Bohrung 6 ausgebildet. Dies bedeutet, dass die Längsachsen 13, entlang derer die Aktoren 8 ihre Wirkung entfalten, am Ort der Angriffsflächen 11 bezüglich der Bohrung 6 jeweils tangential verlaufen. Mit anderen Worten, die von den Aktoren 8 erzeugten Stellkräfte wirken am Ort der Angriffsflächen 11 bezogen auf die Bohrung 6 tangential auf das Außenteil 5 ein und besitzen beim ersten Ausführungsbeispiel somit jeweils ausschließlich eine tangential gerichtete und keine radial gerichtete Komponente. Die Wirkungslinien der Stellkräfte, die bei der in Figur 1 dargestellten Geometrie mit den Längsachsen 13 der Aktoren zusammenfallen, verlaufen vollständig außerhalb der Bohrung 6. Um eine möglichst effiziente Schwingungsdämpfung zu erreichen, können zumindest einige der Aktoren 8 relativ zum Gehäuse 2 so ausgerichtet sein, dass die Wirkungslinien der Stellkräfte parallel zu einer ausgeprägten Schwingungsrichtung der Welle 3 verlaufen.

Die Aktoren 8 können unter Vorspannung eingebaut sein, so dass auch im Ruhezustand der Aktoren 8 Stellkräfte erzeugt werden. Je zwei Aktoren 8 mit parallel zueinander orientierten Längsachsen 13 bilden ein Aktorpaar. Die Aktoren 8 eines Aktorpaars besitzen die gleiche Bauform und erzeugen vorzugsweise gleich große und gleich gerichtete Stellkräfte. Demgemäß erzeugt in einem augenblicklichen Zustand betrachtet bei jedem Aktorpaar je ein Aktor 8 Zugkräfte und je ein Aktor 8 Druckkräfte. Um Zugkräfte auf das Außenteil 5 ausüben zu können, sind die dafür vorgesehenen Aktoren 8 jeweils sowohl an der jeweiligen Angriffsfläche 11 des Außenteils 5 als auch an der jeweiligen Stützfläche 12 des Gehäuses 2 fixiert. Die Aktoren 8 unterschiedlicher Aktorpaare sind beim ersten Ausführungsbeispiel bezüglich ihrer Längsachsen 13 orthogonal zueinander angeordnet.

Die Aktoren 8 können beispielsweise als Hydraulikzylinder realisiert sein, deren Kolben parallel zur Längsachse 13 ausgefahren werden können. Ebenso ist es möglich, piezoelektrische Aktoren 8 einzusetzen, deren Abmessungen entlang der Längsachse 13 durch Anlegen einer elektrischen Spannung variiert werden können.

Durch eine koordinierte Ansteuerung der vier Aktoren 8 ist eine Bewegung des Außenteils 5 in einer beliebigen Richtung innerhalb der in Figur 1 dargestellten Schnittebene möglich. Insbesondere kann auf das Außenteil 5 mit Hilfe der vier Aktoren 8 zu jedem Zeitpunkt eine Kraft ausgeübt werden, die einer augenblicklichen Schwinggeschwindigkeit der Welle 3 entgegengesetzt ist und deren Größe von dieser Schwinggeschwindigkeit abhängt, so dass eine Dämpfung der Schwingungsbewegung bewirkt wird. Auf diese Weise kann die Schwingungsbewegung vollständig oder zumindest teilweise eliminiert werden.

Für die praktische Umsetzung dieses Dämpfungsprinzips ist zum einen die Kenntnis des zeitlichen Verlaufs der Schwingungsbewegung und zum anderen eine auf diesen zeitlichen Verlauf abgestimmte Steuerung der Aktoren 8 erforderlich. Der zeitliche Verlauf der Schwingungsbewegung kann beispielsweise jeweils aktuell mit einem nicht figürlich dargestellten Sensor ermittelt werden, der die Bewegung des auf der Welle 3 montierten Zylinders oder sonstigen Maschinenteils messtechnisch erfasst. Ebenso ist es möglich, den Schwingungsverlauf vorab messtechnisch oder rechnerisch zu ermitteln und in einem Speicher abzulegen. Im Betriebszustand der Lageranordnung wird dann jeweils der Speicher ausgelesen, wobei eine Synchronisation mit der Drehbewegung der Welle 3 erfolgen kann. Die Steuerung der Aktoren 8 kann mittels eines nicht figürlich dargestellten Steuergeräts erfolgen.

Neben dem in den Figuren 1 bis 3 dargestellten ersten Ausführungsbeispielen der Lageranordnung sind noch eine Reihe weiterer Ausführungsbeispiele möglich. Einige dieser weiteren Ausführungsbeispiele werden im Folgenden näher erläutert.

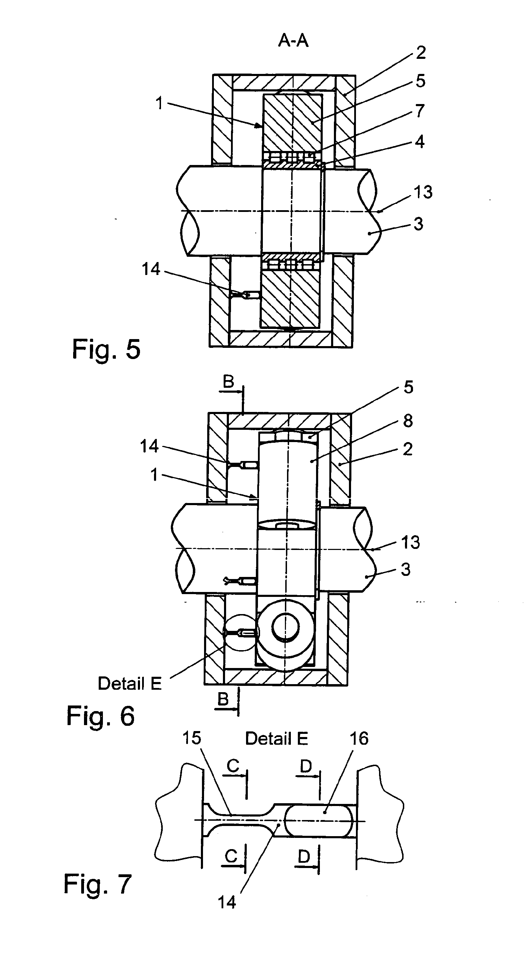

Figur 4 zeigt ein zweites Ausführungsbeispiel der Lageranordnung in Schnittdarstellung. Weitere Schnittdarstellungen des zweiten Ausführungsbeispiels sind in den Figuren 5 und 6 ersichtlich. Dabei entspricht die Art der Darstellung bei Figur 4 der Figur 1, bei Figur 5 der Figur 2 und bei Figur 6 der Figur 3.

Das zweite Ausführungsbeispiel der Lageranordnung stimmt weitgehend mit dem ersten Ausführungsbeispiel überein. Allerdings weist das zweite Ausführungsbeispiel zusätzlich vier Stützstege 14 auf, die in Umfangsrichtung des Außenteils 5 äquidistant angeordnet sind und das Außenteil 5 auf einer Seite axial am Gehäuse 2 fixieren. Wie anhand der Figuren 7 bis 9 noch näher erläutert wird, sind die Stützstege 14 biegeweich ausgebildet und nehmen fast nur Axialkräfte auf. Quer zur Axialrichtung nehmen die Stützstege 14 konstruktionsbedingt keine nennenswerten Kräfte auf, so dass die für die Funktion der Aktoren 8 erforderliche Beweglichkeit des Außenteils 5 quer zur Axialrichtung der Bohrung 6 erhalten bleibt. Die Stützstege 14 dienen insbesondere dazu, die Einwirkung ungünstiger Querkräfte und Momente auf die Aktoren 8 zu verhindern. Derartige Querkräfte und Momente können beispielsweise bei einer Schiefstellung oder einer Durchbiegung der Welle 3 entstehen.

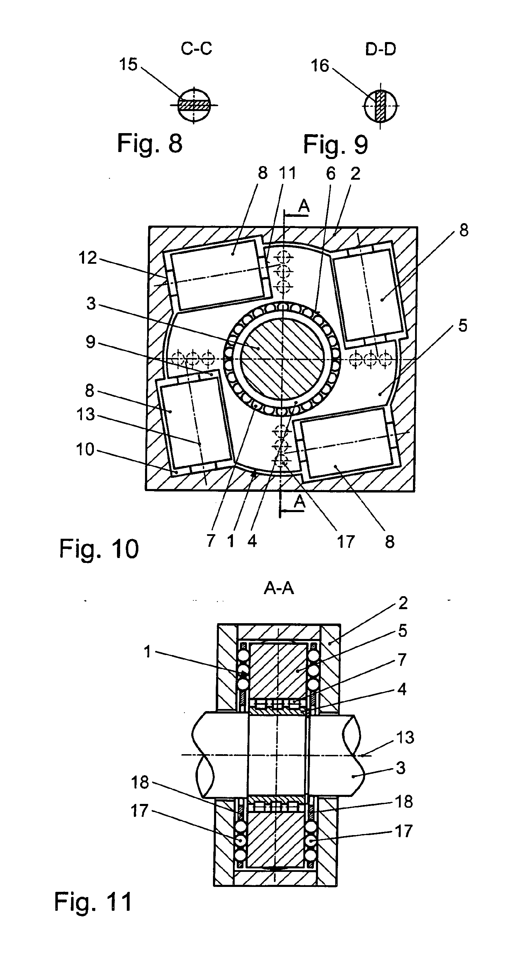

Figur 7 zeigt einen vergrößerten Ausschnitt aus Figur 6 im Bereich einer der Stützstege 14. Zugehörige Schnittdarstellungen an verschiedenen Orten entlang des Stützsteges 14 sind in den Figuren 8 und 9 dargestellt.

Wie aus den Figuren 7 bis 9 hervorgeht, weisen die Stützstege 14 jeweils einen ersten flachen Abschnitt 15 und einen zweiten flachen Abschnitt 16 auf, die aufeinander folgen und um 90° zueinander verdreht sind. Die flachen Abschnitte 15, 16 sind relativ dünn ausgebildet und können daher mit einer sehr geringen Kraft gebogen werden. Gegen Stauchung und Dehnung sind die flachen Anschnitte 15, 16 jedoch sehr steif, so dass die Stützstege 14 bei gleicher Verformung in Axialrichtung erheblich höhere Kräfte aufnehmen können als quer zur Axialrichtung.

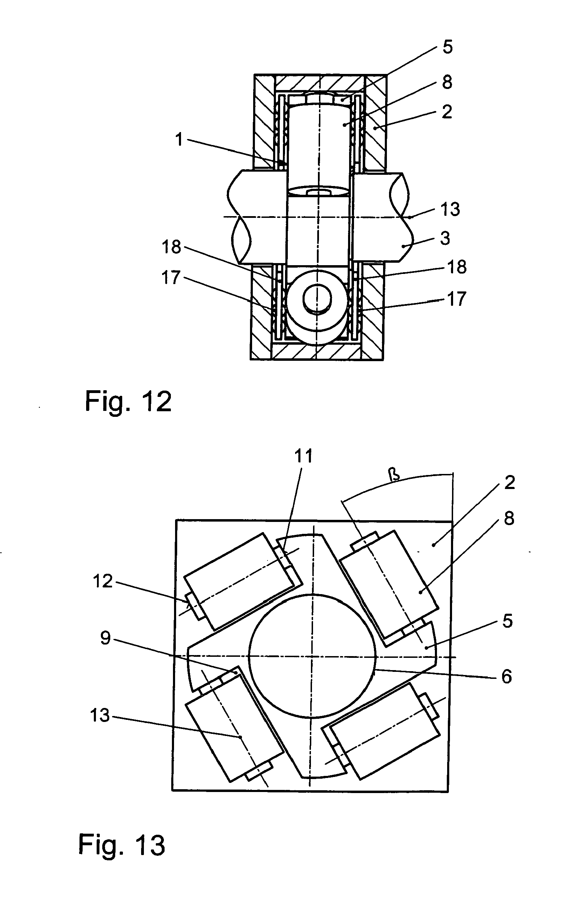

Figur 10 zeigt ein drittes Ausführungsbeispiel der Lageranordnung in Schnittdarstellung analog zu Figur 1. Weitere Schnittdarstellungen des dritten Ausführungsbeispiels zeigen die Figuren 11 und 12, wobei die Art der Darstellung der Figur 2 bzw. der Figur 3 entspricht.

Das dritte Ausführungsbeispiel der Lageranordnung stimmt weitgehend mit dem ersten Ausführungsbeispiel überein, wobei allerdings zusätzlich Linearführungen 17 vorhanden sind. Die Linearführungen 17 sind beim dargestellten Ausführungsbeispiel als Kugeln ausgebildet, die in einem Käfig 18 angeordnet sind. Die Linearführungen 17 stützen das Außenteil 5 linearbeweglich am Gehäuse 2 ab und erfüllen eine analoge Funktion wie die Stützstege 14 des zweiten Ausführungsbeispiels. Dies bedeutet, dass durch die Linearführungen 17 die für die Funktion der Aktoren 8 erforderliche Beweglichkeit des Außenteils 5 innerhalb einer Ebene quer zur Axialrichtung der Bohrung 6 erhalten bleibt und das Außenteil 5 gleichzeitig in Axialrichtung abgestützt wird.

Figur 13 zeigt ein viertes Ausführungsbeispiel der Lageranordnung in einer schematischen Darstellung. Das vierte Ausführungsbeispiel unterscheidet sich hauptsächlich hinsichtlich des Winkels β, unter dem die Aktoranordnung relativ zum Gehäuse 2 orientiert ist, vom ersten Ausführungsbeispiel. Der Winkel β ist als Winkel zwischen der Längsachse 13 einer der Aktoren 8 und einer Seite des Gehäuses 2 definiert. Ebenso kann auch eine andere Definition gewählt werden, da der Winkel β bei den folgenden Betrachtungen lediglich für einen Vergleich der Ausführungsbeispiele herangezogen wird und keine Aussagen zu absoluten Werten des Winkels β gemacht werden. Es ist lediglich erforderlich, bei allen Ausführungsbeispielen die gleiche Definition zu verwenden.

Wie bereits erwähnt, kann der Winkel β im Hinblick auf eine ausgeprägte Schwingungsrichtung der Welle 3 optimiert werden. Aus dem andersartigen Winkel β resultieren beim vierten Ausführungsbeispiel gegenüber dem ersten Ausführungsbeispiel vergrößerte Ausnehmungen 9 im Außenteil 5. Demgemäß befinden sich die Angriffsflächen 11 an einer anderen Position als beim ersten Ausführungsbeispiel und sind nicht parallel zu einer Radialrichtung der Bohrung 6 ausgebildet, so dass die von den Aktoren 8 erzeugten Stellkräfte am Ort der Angriffflächen jeweils zusätzlich zur tangentialen Komponente auch eine radiale Komponente aufweisen.

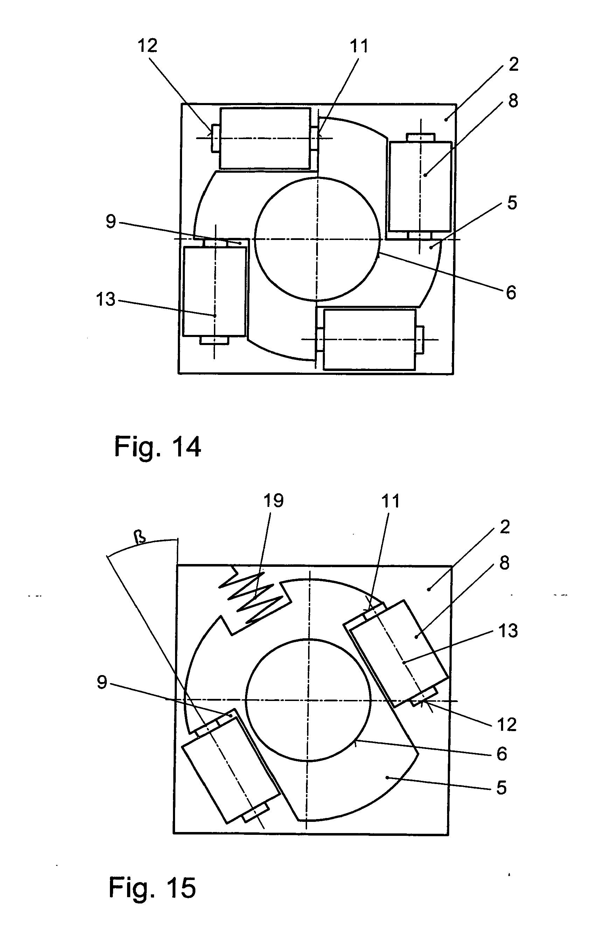

Figur 14 zeigt ein fünftes Ausführungsbeispiel der Lageranordnung in einer schematischen Darstellung. Beim fünften Ausführungsbeispiel ist der Winkel β, unter dem die Aktoranordnung relativ zum Gehäuse 2 orientiert ist, nochmals geändert. Im Übrigen stimmt das fünfte Ausführungsbeispiel mit dem ersten Ausführungsbeispiel überein. Wie beim ersten Ausführungsbeispiel besitzen die Stellkräfte auch beim fünften Ausführungsbeispiel am Ort der Angriffsflächen 11 jeweils ausschließlich eine tangentiale Komponente.

Beim ersten bis fünften Ausführungsbeispiel sind die Aktoren 8 jeweils bezogen auf die Umfangsrichtung der Bohrung 6 gleichsinnig angeordnet. Dies bedeutet, dass die Aktoren 8 bei einem gedachten Umlauf um die Bohrung 6 in einer gegebenen Richtung jeweils von der gleichen Seite an den Angriffsflächen 11 des Außenteils 5 angreifen.

Beim ersten bis fünften Ausführungsbeispiel sind die Aktoren 8 zudem jeweils bezogen auf die Umfangsrichtung der Bohrung 6 äquidistant angeordnet.

Figur 15 zeigt ein sechstes Ausführungsbeispiel der Lageranordnung in einer schematischen Darstellung. Beim sechsten Ausführungsbeispiel weist die Lageranordnung lediglich zwei Aktoren 8 auf, die bezogen auf die Umfangsrichtung der Bohrung 6 gegensinnig angeordnet sind, d. h. bezogen auf einen Umlauf in einer gegebene Richtung von entgegengesetzten Seiten an den Angriffsflächen 11 des Außenteils 5 angreifen. Die Längsachsen 13 der beiden Aktoren 8 verlaufen parallel zueinander. Beide Aktoren 8 können so ausgebildet sein, dass sie lediglich Druckkräfte und keine Zugkräfte erzeugen. Die mit den beiden Aktoren 8 im Bereich der Angriffsflächen 11 erzeugten Stellkräfte verlaufen parallel zueinander und besitzen jeweils eine tangentiale und eine radiale Komponente.

Beim sechsten Ausführungsbeispiel weist die Lageranordnung weiterhin ein elastisches Element 19 auf, das beispielsweise als eine Schraubenfeder ausgebildet ist. Das elastische Element 19 ist zu den beiden Aktoren 8 gegenüberliegend angeordnet und zwischen dem Außenteil 5 und dem Gehäuse 2 derart eingespannt, dass seine Wirkrichtung parallel zu den Längsachsen 13 der beiden Aktoren 8 verläuft. Das elastische Element 19 wirkt somit als ein Rückstellelement, das eine zu den im Bereich der Angriffsflächen 11 auf das Außenteil 5 einwirkenden Stellkräften antiparallel orientierte Rückstellkraft erzeugt und somit die Antriebskraft für eine Bewegung des Außenteils 5 entgegen der Richtung der von den Aktoren 8 erzeugten Stellkräfte liefert. Die Rückstellkraft des elastischen Elements 19 muss von den beiden Aktoren 8 überwunden werden, um eine Positionsänderung des Außenteils 5 in Richtung der von den Aktoren 8 erzeugten Stellkräfte zu erreichen.

Da beim sechsten Ausführungsbeispiel sämtliche Aktoren 8 parallel verlaufende Stellkräfte erzeugen, können damit lediglich Schwingungen oder Schwingungskomponenten parallel zur Richtung der Stellkräfte gedämpft werden. Im Übrigen stimmt das sechste Ausführungsbeispiel hinsichtlich Aufbau und Funktionsweise mit dem ersten Ausführungsbeispiel überein.

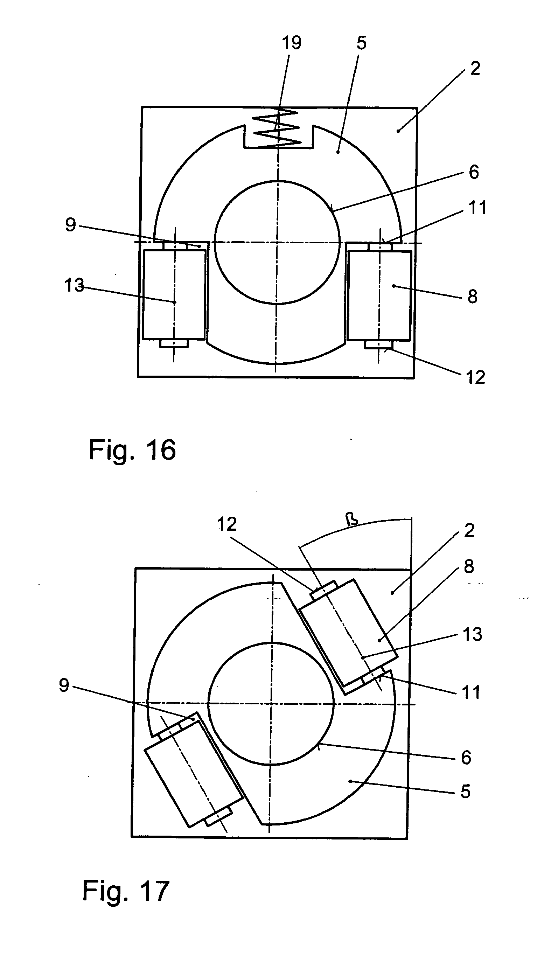

Figur 16 zeigt ein siebtes Ausführungsbeispiel der Lageranordnung in einer schematischen Darstellung. Das siebte Ausführungsbeispiel unterscheidet sich vom sechsten Ausführungsbeispiel lediglich hinsichtlich des Winkels β zwischen der Aktoranordnung und dem Gehäuse 2 und einer damit einhergehende Modifikation der Ausnehmungen 9 des Außenteils 5.

Figur 17 zeigt ein achtes Ausführungsbeispiel der Lageranordnung in einer schematischen Darstellung. Ähnlich wie das sechste und das siebte Ausführungsbeispiel weist auch das achte Ausführungsbeispiel lediglich zwei Aktoren 8 mit parallel orientierten Längsachsen 13 auf. Allerdings entfällt beim achten Ausführungsbeispiel das elastische Element 19. Um dennoch eine Bewegungsumkehr zu ermöglichen, werden Aktoren 8 eingesetzt, die sowohl Druck als auch Zug erzeugen können. Dabei sind die Aktoren 8 bezogen auf die Umfangsrichtung der Bohrung 6 gleichsinnig und äquidistant angeordnet. Die Anordnung ist insbesondere so gewählt, dass die beiden Aktoren 8 bezüglich des Mittelpunkts der Bohrung 6 zueinander punktsymmetrisch angeordnet sind. Beim sechsten und siebten Ausführungsbeispiel sind die Aktoren 8 nicht gleichsinnig angeordnet und es liegt auch keine Punktsymmetrie vor. Im Übrigen stimmt das achte Ausführungsbeispiel mit dem siebten Ausführungsbeispiel überein.

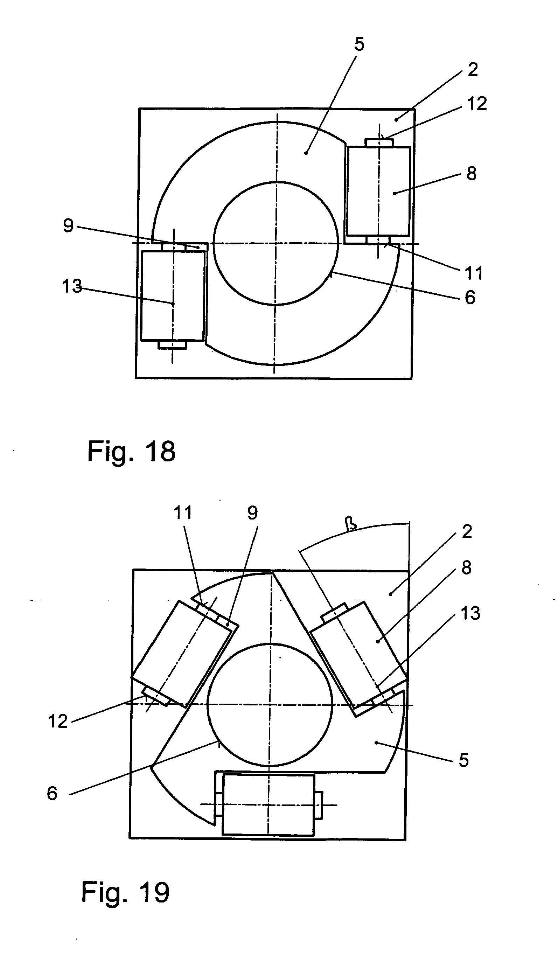

Figur 18 zeigt ein neuntes Ausführungsbeispiel der Lageranordnung in einer schematischen Darstellung. Das neunte Ausführungsbeispiel unterscheidet sich vom achten Ausführungsbeispiel lediglich hinsichtlich des Winkels β zwischen der Aktoranordnung und dem Gehäuse 2 und einer damit einhergehende Modifikation der Ausnehmungen 9 des Außenteils 5. Wie beim achten Ausführungsbeispiel liegt auch beim neunten Ausführungsbeispiel eine gleichsinnige und äquidistante Anordnung der beiden Aktoren 8 vor.

Figur 19 zeigt ein zehntes Ausführungsbeispiel der Lageranordnung in einer schematischen Darstellung. Das neunte Ausführungsbeispiel unterscheidet sich von den vorhergehenden Ausführungsbeispielen dadurch, dass die Lageranordnung drei Aktoren 8 aufweist, die untereinander keine Aktorpaare bilden. Dies bedeutet, dass keine Aktoren 8 mit parallel zueinander orientierten Längsachsen 13 vorhanden sind. Die Aktoren 8 sind bzgl. der Umfangsrichtung der Bohrung 6 gleichsinnig und äquidistant angeordnet.

Die Ansteuerung der Aktoren 8 kann bei allen Ausführungsbeispielen in ähnlicher Weise erfolgen, wie beim ersten Ausführungsbeispiel erwähnt. Allerdings ist dabei jeweils den Besonderheiten der jeweiligen Aktoranordnung Rechnung zu tragen. Auch im Übrigen gilt das zum ersten Ausführungsbeispiel Gesagte für die anderen Ausführungsbeispiele analog, soweit nichts Gegenteiliges erwähnt ist und keine sonstigen Gründe vorliegen, die gegen eine analoge Anwendung sprechen.

### Bezugszeichenliste

- 1: Lager
- 2: Gehäuse
- 3: Welle
- 4: Innenteil
- 5: Außenteil
- 6: Bohrung
- 7: Wälzkörper
- 8: Aktor
- 9: Ausnehmung
- 10: Ausnehmung
- 11: Angriffsfläche
- 12: Stützfläche
- 13: Längsachse
- 14: Stützsteg
- 15: erster flacher Abschnitt
- 16: zweiter flacher Abschnitt
- 17: Linearführung
- 18: Käfig
- 19: elastisches Element

## Patentansprüche

1. Aktiv gedämpfte Lageranordnung mit
- einem Innenteil (4),
- einem Außenteil (5), welches eine Bohrung (6) aufweist, innerhalb derer das Innenteil (4) relativ zum Außenteil (5) drehbar angeordnet ist und
- wenigstens einem Aktor (8) zum Erzeugen einer im Bereich einer Angriffsfläche (11) auf das Außenteil (5) einwirkenden zeitlich variablen Stellkraft,
**dadurch gekennzeichnet, dass** die Stellkraft eine bezüglich der Bohrung (6) des Außenteils (5) tangential gerichtete Komponente aufweist, die wenigstens so groß wie eine bezüglich der Bohrung (6) des Außenteils (5) radial gerichtete Komponente ist.

2. Lageranordnung nach Anspruch 1, **dadurch gekennzeichnet, dass** die tangential gerichtete Komponente der Stellkraft wenigstens doppelt so groß wie die radial gerichtete Komponente ist.

3. Lageranordnung nach einem der vorhergehenden Ansprüche, **dadurch gekennzeichnet, dass** die Stellkraft keine radial gerichtete Komponente aufweist.

4. Lageranordnung nach einem der vorhergehenden Ansprüche, **dadurch gekennzeichnet, dass** die Stellkraft entlang einer Wirkungslinie wirkt, die vollständig außerhalb der Bohrung (6) des Außenteils (5) verläuft.

5. Lageranordnung nach einem der vorhergehenden Ansprüche, **dadurch gekennzeichnet, dass** die Positionierung und/oder Länge des Aktors (8) entlang einer Achse (13) variierbar ist, die vollständig außerhalb der Bohrung (6) des Außenteils (5) verläuft.

6. Lageranordnung nach einem der vorhergehenden Ansprüche, **dadurch gekennzeichnet, dass** wenigstens ein Stabilisierungselement vorhanden ist, das eine Bewegung des Außenteils (5) in Axialrichtung der Bohrung (6) unterbindet und ein Bewegung des Außenteils (5) quer zur Axialrichtung der Bohrung (6) zulässt.

7. Lageranordnung nach Anspruch 6, **dadurch gekennzeichnet, dass** das Stabilisierungselement als ein Stützsteg (14) oder als eine Linearführung (15) ausgebildet ist, wobei insbesondere der Stützsteg (14) in Axialrichtung steifer ausgebildet ist als quer zur Axialrichtung.

8. Lageranordnung nach einem der vorhergehenden Ansprüche, **dadurch gekennzeichnet, dass** der Aktor (8) wenigstens partiell in einer ersten Ausnehmung (9) im Außenteil (5) und/oder wenigstens partiell in einer zweiten Ausnehmung (10) in einem Gehäuse (2) angeordnet ist.

9. Lageranordnung nach einem der vorhergehenden Ansprüche, **dadurch gekennzeichnet, dass** der Aktor (8) in einem Ruhezustand eine von Null verschiedene Stellkraft erzeugt.

10. Lageranordnung nach einem der vorhergehenden Ansprüche, **dadurch gekennzeichnet, dass** wenigstens ein elastisches Element (19) vorhanden ist, das eine zur Stellkraft antiparallele Rückstellkraft erzeugt.

11. Lageranordnung nach einem der vorhergehenden Ansprüche, **dadurch gekennzeichnet, dass** die Lageranordnung ein als Wälzlager ausgebildetes Lager (1) aufweist, wobei das Außenteil (5) insbesondere als ein Außenring des Lagers (1) und/oder das Innenteil (4) insbesondere als ein Innenring des Lagers (1) ausgebildet ist.

12. Lageranordnung nach einem der vorhergehenden Ansprüche, **dadurch gekennzeichnet, dass** wenigstens zwei Aktoren (8) vorhanden sind, die zueinander parallele und/der orthogonale Stellkräfte erzeugen oder die keine zueinander orthogonale oder parallele Stellkräfte erzeugen.

13. Lageranordnung nach einem der vorhergehenden Ansprüche, **dadurch gekennzeichnet, dass** sämtliche Aktoren (8) bezogen auf die Umfangsrichtung der Bohrung (6) des Außenteils (5) gleichsinnig und/oder äquidistant angeordnet sind.

14. Lageranordnung nach einem der vorhergehenden Ansprüche, **dadurch gekennzeichnet, dass** die Wirkungslinien sämtlicher Stellkräfte vollständig außerhalb der Bohrung (6) des Außenteils (5) verlaufen.

15. Verfahren zur aktiven Dämpfung eines drehenden Maschinenteils (3), wobei das Maschinenteil (3) oder ein mit dem Maschinenteil (3) verbundenes Innenteil (4) in einer Bohrung (6) eines Außenteils (5) drehbar gelagert wird und mittels wenigstens eines Aktors (8) eine im Bereich einer Angriffsfläche (11) auf das Außenteil (5) einwirkende zeitlich variable Stellkraft erzeugt wird, **dadurch gekennzeichnet, dass** die Stellkraft mit einer bezüglich der Bohrung (6) des Außenteils (5) tangential gerichteten Komponente erzeugt wird, die wenigstens so groß wie eine bezüglich der Bohrung (6) des Außenteils (5) radial gerichtete Komponente ist.
